# EUROPEAN PATENT SPECIFICATION

(11) **EP 1 236 948 B1**
(45) Date of publication and mention of the grant of the patent: **21.09.2005**
(21) Application number: 01830142.4
(22) Date of filing: 28.02.2001
(51) Int. Cl.: F16L 55/10

(54) **A removable connection device for pipelines**
Lösbare Verbindungsvorrichtung für Rohrleitungen
Dispositif de connexion amovible pour conduites

(43) Date of publication of application: 04.09.2002
(73) Proprietor: BN OPW S.r.l., 40064 Ozzano dell'Emilia (Bologna) (IT)
(72) Inventor: Frascaroli, Franco, 40037 Sasso Marconi (Bologna) (IT); Fiumi, Piero, 40033 Casalecchio di Reno (Bologna) (IT)
(74) Representative: Lanzoni, Luciano

(56) References cited:
- US-A- 3 420 497
- US-A- 4 549 575
- US-A- 4 865 077

## Description

The present invention relates to a device for removably connecting a fuel supply pipeline with a dispensing element.

In petrol stations, especially in stations in which a user can refuel the vehicle by him/herself without the operator's intervention, the pipelines connected to the petrol pump may get damaged if, for instance, the user leaves after completing refuelling operations without detaching the dispensing device from the vehicle tank. Such damage can be such as to cause the rupture of the pipeline itself, with the consequent spillage of the fuel contained in the petrol pump.

Hence, so-called anti-ripping devices are used, constituted by two concentric cylindrical pipe unions which allow to connect a fuel supply pipeline with a dispensing gun. This connection is interrupted the instant in which an axial force is exerted on the pipeline, for instance because of the departure of the vehicle with the dispenser still connected to the tank.

In such situations, the anti-ripping device allows a pipe union to detach from the other, preventing damage to the pipeline. Obviously, in order to prevent fuel spillage, appropriate valves are provided within the pipe unions to interrupt the passage of the fluid the instant in which the two parts are detached.

In order to allow the dispenser to be detached from the pipeline in the aforementioned conditions, known anti-ripping devices are provided with means that allow to lock the two pipe unions together under normal operating conditions, and which are unlocked as a result of the application of an axial force in the direction of detachment of a pipe union relative to the other. Generally, such means are constituted by balls, housed in appropriate seats obtained on a coupling connecting the two pipe unions, which are inserted in corresponding grooves of the pipe union connected to the dispensing gun to effect the locking operation.

Once the two pipe unions are detached, the elements that constitute the whole anti-ripping device must subsequently be reassembled.

In a first type of device, in which the balls are maintained in the locked position by a ring, the detachment of the two parts leads to the deformation of the ring and thus the subsequent re-assembly may require the replacement of the ring itself.

In a second type of device, when the detachment takes place, the balls move into a first groove obtained on a ring nut for fastening the coupling to the pipe union, and then return into the seats of the coupling, by effect of a spring, after the detachment is complete.

To reassemble this second type of device, it is necessary to remove the gear nut, move it on the coupling until the balls are in correspondence with a second annular groove of the ring nut itself, insert the pipe union and re-connect the gear nut on the coupling in such a way that the balls move back into the first groove in the locked position. This second type of device is bulky and more complex in its construction, since it comprises an additional external element, the fastening ring nut, whereon appropriate machining processes must be completed to obtain the grooves. Moreover, to reassemble the two pipe unions after detachment, it is necessary to disassemble the device completely and reassemble the individual components.

It is also known from document US4865077 a hose breakaway coupling which is adapted to separate at a pre-determined force. The two halves of the coupling are connected by releasing a bias member and directly coupling the two halves of the coupling together and then resetting the bias member to load the release mechanism. Reconnection can be achieved by relocation of the tension on spring by rotation of the sheath and the housing, anticlock wise relative to the second sheath. With the outer sleeve rotated to its fully opened position, the collar can be pushed back against the springs which aligns the recesses in the second sleeve with the recesses in the intermediate sleeve whereby the ball bearings are forced out of the way by the nozzle to allow the nozzle into sealing engagement. When the collar is released, the recesses on the second sleeve move out of alignment forcing the ball bearings to engage the intermediate sleeve with the discharge nozzle.

The aim of the present invention therefore is to eliminate the aforementioned drawbacks. In particular, the aim of the present invention is to provide a removable connecting device which allows for simple re-assembly after detachment.

A further aim of the present invention is to provide a device that has reduced size and is simple to construct.

This aims and others besides, which shall become more readily apparent in the description that follows, are achieved in accordance with the present invention by a removable connection device for pipelines as defined in the accompanying claims.

Further features and advantages of the present invention shall become more readily apparent from the detailed description that follows, made with reference to the accompanying drawings, which represent an embodiment provided purely by way of non limiting examples, in which:
- Figure 1 shows a perspective view of the device according to a preferred embodiment;
- Figure 2 shows a longitudinal section of the device in the locked condition of the first and of the second pipe union;
- Figure 3 shows a longitudinal section of the device in the moment in which the first pipe union is detached from the second pipe union;
- Figure 4 shows a longitudinal section of the device after the first pipe union is detached from the second pipe union;
- Figure 5 shows a longitudinal section of the device in the initial re-assembly phase after the detachment.

In accordance with the figures of the accompanying drawings, the reference number 1 indicates a device for removably connecting a fuel supply pipeline, in particular LPG (liquefied petroleum gas) for motor vehicles, with a dispenser device to be inserted into the tank of the motor vehicle.

The device 1 comprises a first hollow, cylindrical, tubular pipe union 2, which is connected to a fuel dispenser (not shown in the figure) and a second tubular pipe union 3, also cylindrical and hollow, which is connected to an end of the fuel supply pipeline (not shown).

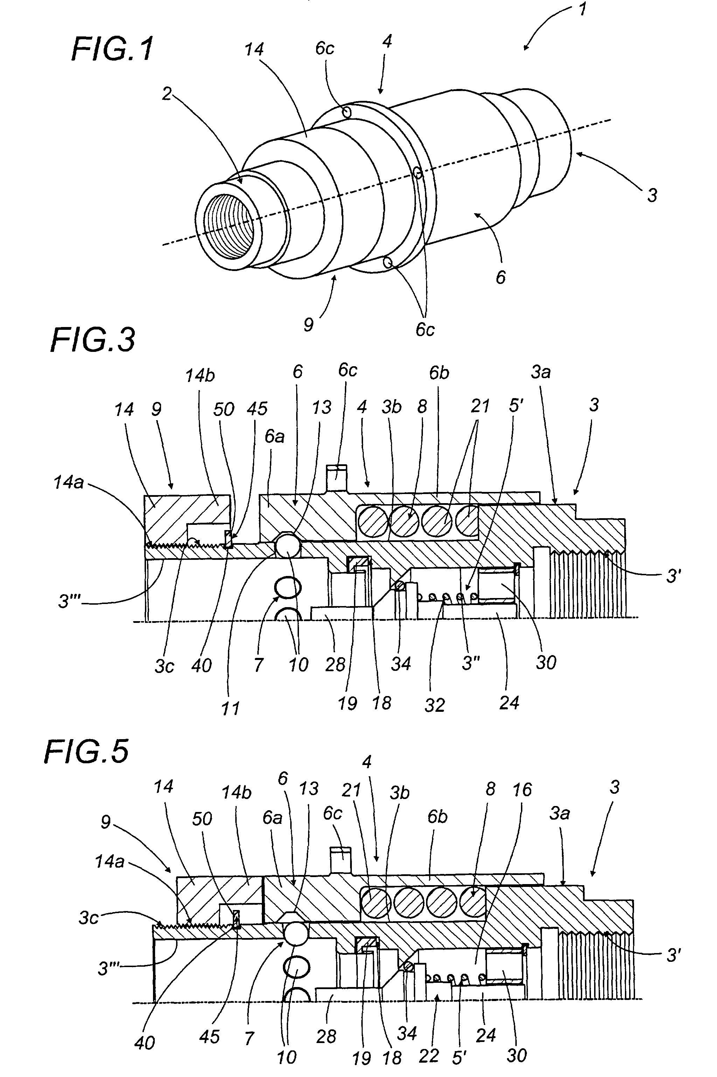

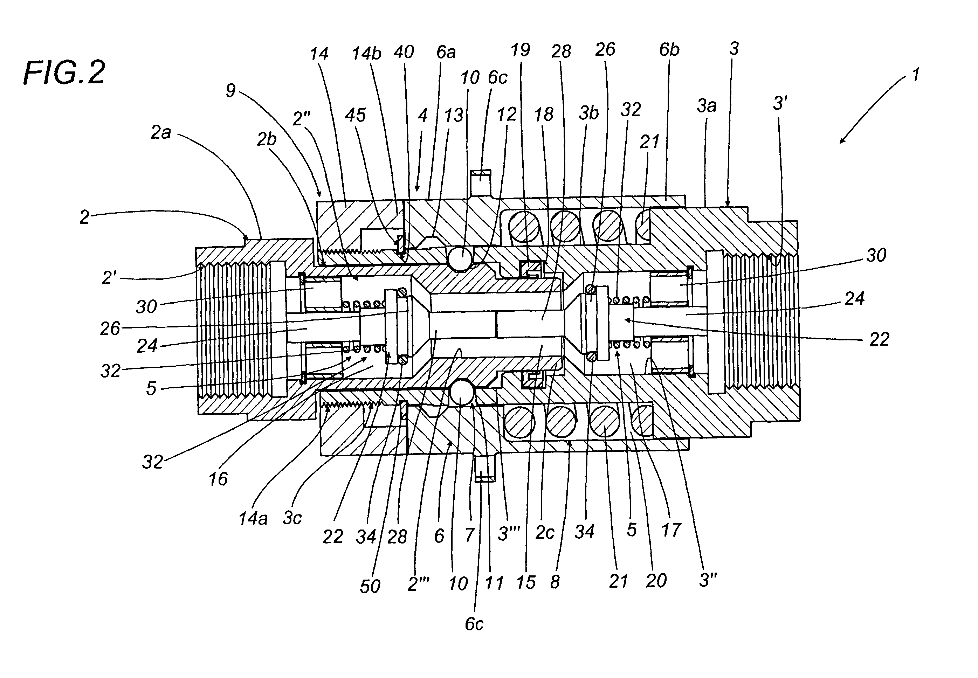

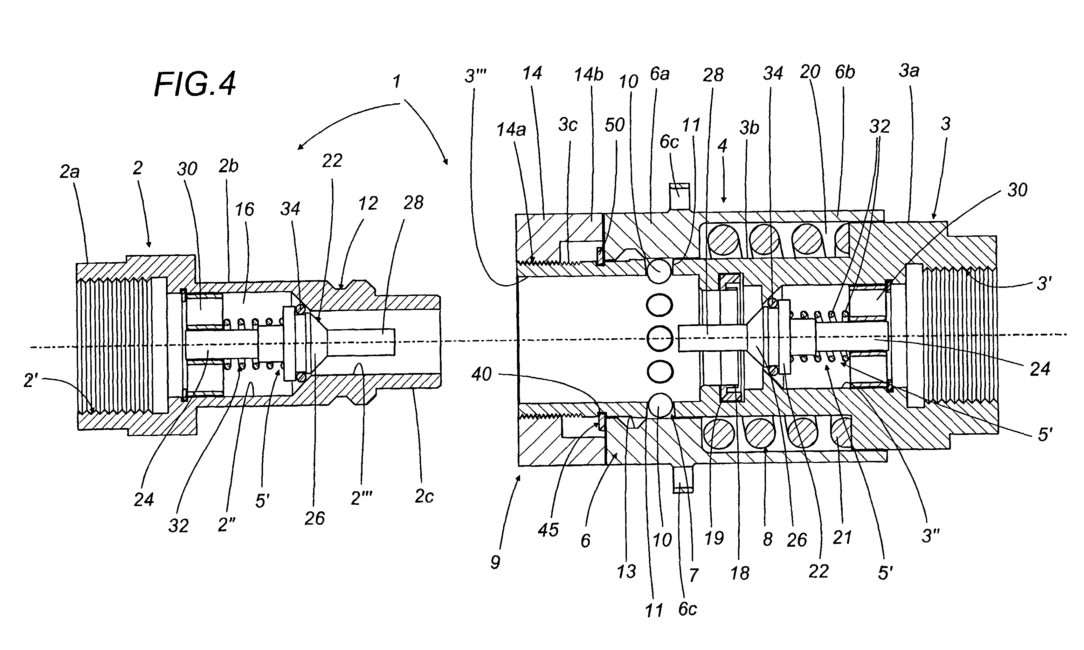

The device 1 comprises connecting means 4 for bringing the first pipe union 2 and the second pipe union 3 from a connected position (shown in Figures 1 and 2) to a detached position (shown in Figure 4).

Inside the first pipe union 2 and the second pipe union 3 are positioned means 5 for opening the passage of fuel when the first pipe union 2 and the second pipe union 3 are connected (Figure 2) and means 5' for shutting off the passage of fuel when the pipe unions 2, 3 are detached (Figure 4).

According to the present invention the connecting means 4 comprise a coupling 6 within which the second pipe union 3 is movable. The coupling 6 has holes 6c destined to couple the device 1 to a fixed base (not shown) by means of appropriate connecting elements such as, for instance, steel cables (not shown).

Between the coupling 6 and the first 2 and second pipe union 3 are interposed engagement means 7, which are sensitive to an axial force in the direction of detachment to define an unlocking position of the first pipe union 2 from the second pipe union 3.

The connecting means 4 further comprise elastic means 8, interposed between the coupling 6 and the second pipe union 3, to maintain the second pipe union 3 in locked position with the first pipe union 2 and means 9 to bring the second pipe union 3 from the unlocked position, to achieve the connection of the first pipe union 2 to the second pipe union 3, to the locked position.

According to the embodiment shown in the figures, the engagement means 7 are constituted by a plurality of balls 10 housed in corresponding seats 11 positioned in annular fashion on the second pipe union 3.

The balls 10 are radially engageable in a first annular groove 12 obtained in the first pipe union 2 to achieve the locking and in a second annular groove 13 obtained in the coupling 6 to achieve the unlocking of the first pipe union 2 from the second pipe union 3.

Advantageously, the means 9 for bringing the second pipe union 3 from the unlocked position to the locked position are constituted by a ring nut 14 mounted on the second pipe union 3.

The ring nut 14 has a first annular portion 14a with smaller inner diameter, threaded internally, and able to be associated to a corresponding threaded segment 3c of the second pipe union 3, and to a second annular portion 14b having greater inner diameter.

As shown in Figure 2, the end of the second annular portion 14b of the ring nut is positioned in contact with the coupling 6 in the locked position.

According to a preferred embodiment, shown in the figures, the outer surface of the first pipe union 2 has a first cylindrical portion 2a, whose diameter is greater than the inner diameter of the first portion 14a of the ring nut 14, able to come in contact with the ring nut 14 when the first pipe union 2 and the second pipe union 3 are connected.

The outer surface of the first pipe union 2 also has a second cylindrical portion 2b with smaller diameter, able to sliding within the second pipe union 3, whereon is obtained the annular groove 12 in which the balls 10 are engaged to achieve the locking.

The second cylindrical portion 2b has a reduction in diameter in correspondence with the end 2c able to come in contact with the second pipe union 3.

The inner surface of the first pipe union 2 has a first threaded cylindrical portion 2' able to be engaged with the dispensing element and a second cylindrical portion 2", having smaller diameter, which further defines a first seat 16 for housing the means 5 for opening and the means 5' for shutting off the passage of fuel.

A third cylindrical portion 2"' of the inner surface of the first pipe union has a reduction in diameter and, associated with a corresponding cylindrical portion 3" of the second pipe union 3, defines a channel 15 for the passage of the fuel.

According to a preferred embodiment, the outer surface of the second pipe union 3 has a first cylindrical portion 3a, having greater diameter than the inner diameter of the ring nut 14, able to sliding within the coupling 6.

The outer surface of the second pipe union also has a second cylindrical portion 3b with smaller diameter, which extends within the coupling 6 and has, in correspondence with the end, the threaded segment 3c able to be associated with the corresponding threaded portion 14a of the ring nut 14.

According to the embodiment shown in the figures, the threaded segment 3c obtained on the second pipe union 3 extends for a greater length than the threaded portion 14a of the ring nut 14 necessary to bring the second pipe union 3 into the unlocked position in order to achieve the connection of the pipe unions 2, 3, as shall be described farther on.

On the second portion 3b of the outer surface of the second pipe union 3 are obtained holes having cone frustum shaped profile towards the interior of the second pipe union 3, which constitute the seats 11 for the locking balls 10. Each seat 11 has relative dimensions with respect to the ball 10 in such a way as to allow a certain projection of the ball 10 towards the interior of the second pipe union 3, but such as to prevent the ball 10 from falling into the second pipe union 3 when the first pipe union 2 is detached from the second pipe union 3. The axial inclination of the inner surface of the seat 11 is also such as to prevent jams and blockages of the ball 10 inside the seat 11 itself.

On the second portion 2b is also obtained an annular groove 40 defining a seat for means 45 for retaining the second pipe union 3 on the coupling 6 in such a way as to define the locking position of the second pipe union 3 relative to the first pipe union 2. In a preferred embodiment, the retaining means 45 are constituted by a ring 50, presenting a portion projecting from the groove 40, and defining an end stop of the second pipe union 3 relative to the coupling 6.

The inner surface of the second pipe union 3 has a first threaded portion 3' able to be associated to the fuel supply pipeline.

A second portion 3", having smaller diameter, extends in contact with the first pipe union 2 to define, in association with the portion 2"' of the first pipe union 2, the channel 15 for the passage of the fuel.

The second portion 3" further defines a second seat 17 for housing the means 5 for opening and the means 5' for shutting off the passage of fuel.

The inner surface of the second pipe union 3 has a third portion 3"', shaped substantially counter relative to the portion 2b of the first pipe union 2.

According to the illustrated embodiment, on the portion 3"' of the second pipe union 3, in correspondence with the end 2c of the first pipe union 2, an annular cavity 18 is obtained into which is inserted a lip sealing ring 19.

The coupling 6 has a first annular portion 6a, in contact with the ring nut 14 in the locked position, within which is able to sliding the second portion 3b of the second pipe union 3, and a second annular portion 6b, having greater inner diameter, into which can be inserted the first portion 3a of the second pipe union 3.

In this way, an annular seat 20 is defined for the elastic means 8 constituted, in the illustrated embodiment, by a helical spring 21 which is thus interposed between the first outer portion 3a of the second pipe union 3 and the first annular portion 6a of the coupling 6.

The opening means 5 and the shut-off means 5' are constituted by a pair of valves 22, positioned mutually opposite within the first pipe union 2 and the second pipe union 3 in the corresponding seats 16, 17.

Each valve 22 has a stem 24, a substantially cone frustum shaped head 26, and an axial extension 28.

The stem 24 is engaged in a bushing 30, housed within each seat 16, 17 and presenting holes positioned radially to allow the fluid to flow. Between the bushing 30 and the head 26 of each valve 22 is interposed a respective spring 32.

The intermediate portion of the first seat 16 and the end of the second seat 17 have a cone frustum profile for housing the head 26 of each valve 22 in the condition in which it shuts off the passage of the fluid.

In the condition in which the passage of the fluid is opened, the two axial extensions 28 are in contact and, opposing the axial force exerted by the springs 32, they maintain the head 26 of each valve 22 removed relative to the cone frustum profile of the seats 16, 17.

The head 26 of each valve is provided with a sealing ring 34 which is placed in contact with the inner surface of the first pipe union 2 and of the second pipe union 3 in correspondence with the cone frustum profile to guarantee the seal in the detached position.

Figure 2 shows the device 1 during the connecting phase of the first pipe union 2 with the second union 3. In this phase, the balls 10 are engaged in the annular groove 12 obtained on the first pipe union 2 allow the locking of the pipe unions 2, 3 themselves.

In the locked position, the stopping ring 50, integral with the second pipe union 3, is in contact with the first portion 6a of the coupling 6 itself.

The ring nut 14 is screwed onto a portion of the treaded segment 3c of the second pipe union 3, positioning itself in contact with the coupling 6 and aligning itself with the end of the second pipe union 3.

The valves 22 are maintained removed from the inner cone frustum profile of the seats 16, 17 respectively of the first pipe union 2 and of the second pipe union 3 in such a way as to allow the fuel to flow from the supply pipeline to the dispensing element.

Figure 3 shows the device 1 during the detaching phase of the first pipe union 2 from the second pipe union 3 following the application of an axial force in the direction of mutual detachment of the two pipe unions 2, 3.

The application of the axial force on the first pipe union 2 brings about a traction on the second pipe union 3 that moves within the coupling 6, which remains fixed, towards the point of application of the force, compressing the spring 21.

The movement of the second pipe union 2 entails a movement away of the ring nut 14 from the coupling 6 and the insertion of the balls 10 in the groove 13 obtained in the coupling 6.

In this way, the balls 10 themselves are no longer engaged in the groove of the first pipe union 2 which is unlocked and able to translate in the direction of application of the force, extracting itself from the second pipe union 3.

As shown in Figure 4, when the first pipe union 2 is detached from the pipe union 3, the pipe union 3 moves back, by effect of the spring 21, to the initial position in which the ring nut 14 and the stopping ring 50 are in contact with the coupling 6.

During the detachment, the valves 22 ensure the shutting off of the passage of fuel from the supply pipeline towards the dispenser. When the first pipe union 2 is removed from the second pipe union 3, the extensions 28 of the valves 22 are detached, bring about the release of the springs 32. Each spring 32 then thrusts the head 26 of each valve 22 against the corresponding cone frustum profile of the seats 16, 17 obtaining the shutting off the passage of fuel, whilst the rings 34 guarantee the seal.

To reassemble the device 1, returning the first pipe union 2 to the locked condition inside the second pipe union 3, it is necessary to return the balls 10 inside the groove 13 obtained in the coupling 6.

As shown in Figure 5, to reassemble the device 1, the ring nut 14, remaining in contact with the coupling 6, is further screwed onto the threaded segment 3c of the second pipe union 3.

In this way, the second pipe union 3 moves inside the coupling 6 compressing the spring 21 until the balls 10 are in correspondence with the groove 13 of the coupling 6.

The balls 10 are then engaged in the groove 13 allowing the reinsertion of the first pipe union 2 inside the second pipe union 3.

Subsequently, the ring nut 14 is unscrewed, unloading the spring 21, in order to return the second pipe union 3 to the initial position of Figure 2, in which the stopping ring 40 is in contact with the coupling 6 and the end of the second pipe union 3 is aligned with the end of the ring nut 14.

The balls 10 are then returned into the groove 12 of the first pipe union 2 achieving locking of the two pipe unions 2, 3.

The device according to the present invention therefore allows to obtain a removable connection which can be easily reassembled after detachment.

To allow the reinsertion of the first pipe union inside the second bringing the balls in correspondence with the groove of the coupling, it is sufficient to screw and unscrew the ring nut on the second pipe union to translate it relative to the coupling itself.

Thus, it is not necessary to disassemble the device in order to position the balls in correspondence with the appropriate grooves or even to replace components which may have been deformed during the detachment.

Moreover, a single annular groove is obtained on the coupling, in which the balls are engaged both in the unlocked position and as a result of the application of the axial detaching force, and of the screwing of the ring nut to restore the connection between the two pipe unions.

In addition, the device has reduced size, since the element that allows to return the second pipe union to the unlocked position is constituted by a ring nut mounted on the pipe union itself, and thus having the same outer diameter of the coupling.

The conformation of the ring nut, presenting an annular diameter with greater inner diameter, allows to obtain, on the second pipe union, a threaded segment having grater length than the corresponding thread of the ring nut.

This conformation also allows the insertion of the end stop ring of the second pipe union relative to the coupling in order to position the second pipe union during the reinsertion of the first pipe union subsequently to the detachment.

## Claims

1. A device for removably connecting a fuel supply pipeline with a dispensing element comprising:
a first substantially tubular pipe union (2) connectable to the dispensing element;
a second substantially tubular pipe union (3) connectable to an end of the pipeline; connecting means (4) for bringing said pipe unions (2, 3) from a mutually connected position to a mutually detached position;
means (5) for opening the passage of the fuel when said first pipe union (2) and said second pipe union (3) are connected and means (5') for shutting off the passage of the fuel when said pipe unions (2, 3) are detached, said opening means (5) and closing means (5') being positioned inside said first pipe union (2) and said second pipe union (3), said connecting means (4) comprising:
a coupling (6) within which the second pipe union (3) is movable;
a plurality of balls (10) housed in corresponding seats (11) positioned in an annular manner on the second pipe union (3), said balls (10) being radially engageable in a first annular groove (12) obtained in said first pipe union (2) to achieve a locked position of the first pipe union (2) within the second pipe union (3), said balls (10) being engageable in a second annular groove (13) obtained on the coupling (6) to define an unlocked position of the first pipe union (2) from the second pipe union (3);
elastic means (8) interposed between said coupling (6) and said second pipe union (3) to maintain said second pipe union (3) in the locked position with said first pipe union (2); and
a ring nut element (14) mounted on said second pipe union (3) and having a first annular entirely threaded portion (14a) associated with a corresponding threaded segment (3c) of said second pipe union (3);
**characterised in that**, upon screwing the ring nut element (14) onto the threaded segment (3c), said ring nut element (14) moves the second pipe union (3) inside the coupling (6) and compresses the elastic means (8) until the balls (10) are in correspondence with the second annular groove (13) of the coupling (6), to bring said second pipe union (3) in said unlocked position in order to achieve said connection of the first pipe union (2) with the second pipe union (3).

2. A device as claimed in claim 1, **characterised in that** said ring nut element (14) has a second annular portion (14b) having an end positioned in contact with said coupling (6) in said locked position.

3. A device as claimed in claim 1, **characterised in that** the threaded segment (3c) extends on the second pipe union (3) for a greater length than that of the first threaded portion (14a) of the ring nut (14) necessary to bring said second pipe union (3) in said unlocked position to achieve said connection of the first pipe union (2) with the second pipe union (3).

4. A device as claimed in any of the previous claims, **characterised in that** said connecting means (4) further comprise means (45) for retaining said second pipe union (3) on said coupling (6) to define said locked position of said second pipe union (3) with said first pipe union (2).

5. A device as claimed in claim 4, **characterised in that** said retaining means (45) are constituted by a ring (50), presenting a portion projecting from a groove (40) obtained on said second pipe union (3), and defining an end stop of said second pipe union (3) relative to said coupling (6).

6. A device as claimed in any of the previous claims, **characterised in that** said elastic means (8) are constituted by a helical spring (21).

## Patentansprüche

1. Lösbare Verbindungsvorrichtung für Rohrleitungen für die Kraftstoffzufuhr mit einem Abgabeelement, enthaltend:
ein erstes, im wesentlichen rohrförmiges Verbindungsstück (2), anschliessbar an das Abgabeelement;
ein zweites, im wesentlichen rohrförmiges Verbindungsstück (3), anschliessbar an ein Ende der Rohrleitung;
Anschlussmittel (4), um die genannten Verbindungsstücke (2, 3) aus einer gegenseitig verbundenen Position in eine gegenseitig gelöste Position zu bringen;
Mittel (5) zum Öffnen der Durchlaufs für den Kraftstoff, wenn das genannte erste Verbindungsstück (2) und das genannte zweite Verbindungsstück (3) angeschlossen sind, und Mittel (5') zum Absperren des Durchlaufs für den Kraftstoff, wenn die genannten Verbindungsstücke (2, 3) gelöst sind, wobei die genannten Öffnungsmittel (5) und Absperrmittel (5') im Inneren des genannten ersten Verbindungsstückes (2) und des genannten zweiten Verbindungsstückes (3) angeordnet sind, und wobei die genannten Anschlussmittel (4) wie folgt enthalten:
eine Kupplung (6), innerhalb welcher das zweite Verbindungsstück (3) beweglich ist;
eine Anzahl von Kugeln (10), aufgenommen in entsprechenden Sitzen (11), die ringförmig an dem zweiten Verbindungsstück (3) angeordnet sind, wobei die genannten Kugeln (10) radial in eine erste ringförmige Rille (12) greifen können, eingearbeitet in das genannte erste Verbindungsstück (2), um eine blockierte Position des ersten Verbindungsstückes (2) innerhalb des zweiten Verbindungsstückes (3) zu erhalten, wobei die genannten Kugeln (10) in eine zweite ringförmige Rille (13) greifen können, die an der Kupplung (6) erhalten ist, um eine freigegebene Position des ersten Verbindungsstückes (2) von dem zweiten Verbindungsstück (3) zu erhalten;
elastische Mittel (8), eingesetzt zwischen der genannten Kupplung (6) und dem genannten zweiten Verbindungsstück (3), um das genannte zweite Verbindungsstück (3) in der blockierten Position mit dem genannten ersten Verbindungsstück (2) zu halten; und
eine Ringmutter (14), montiert an dem genannten zweiten Verbindungsstück (3) und einen ersten ringförmigen, vollkommen mit Gewinde versehenen Abschnitt (14a) aufweisend, der einem entsprechenden Gewindeabschnitt (3c) des genannten zweiten Verbindungsstückes (3) zugeordnet ist;
**dadurch gekennzeichnet, dass** nach dem Aufschrauben der Ringmutter (14) auf den Gewindeabschnitt (3c) die genannte Ringmutter (14) das zweite Verbindungsstück (3) im Inneren der Kupplung (6) verschiebt und die elastischen Mittel (8) zusammenpresst, bis sich die Kugeln (10) entsprechend zu der zweiten ringförmigen Rille (13) der Kupplung (6) angeordnet befinden, um das genannte zweite Verbindungsstück (3) in die genannte freigegebene Position zu bringen, um somit die genannte Verbindung des ersten Verbindungsstückes (2) mit dem zweiten Verbindungsstück (3) zu erreichen.

2. Vorrichtung nach Patentanspruch 1, **dadurch gekennzeichnet, dass** die genannte Ringmutter (14) einen zweiten ringförmigen Abschnitt (14b) enthält, welche ein Ende hat, das im Kontakt mit der genannten Kupplung (6) in der genannten blockierten Position angeordnet ist.

3. Vorrichtung nach Patentanspruch 1, **dadurch gekennzeichnet, dass** sich der Gewindeabschnitt (3c) an dem zweiten Verbindungsstück (3) über eine grössere Länge erstreckt als die des ersten Gewindeabschnittes (14a) der Ringmutter (14), notwendig, um das genannte zweite Verbindungsstück (3) in die genannte freigegebene Position zu bringen, um die genannte Verbindung des ersten Verbindungsstückes (2) mit dem zweiten Verbindungsstück (3) zu erhalten.

4. Vorrichtung nach einem beliebigen der vorstehenden Patentansprüche, **dadurch gekennzeichnet, dass** die genannten Anschlussmittel (4) ausserdem Mittel (45) zum Halten des genannten zweiten Verbindungsstückes (3) an der genannten Kupplung (6) enthalten, um die genannte blockierte Position des genannten zweiten Verbindungsstückes (3) mit dem genannten ersten Verbindungsstück (2) zu bestimmen.

5. Vorrichtung nach Patentanspruch 4, **dadurch gekennzeichnet, dass** die genannten Haltemittel (45) aus einem Ring (50) bestehen, der einen Abschnitt (50) aufweist, welcher aus einer an dem genannten zweiten Verbindungsstück (3) erhaltenen Rille (40) hervorsteht und einen Anschlag für das genannte zweite Verbindungsstück (3) im Verhältnis zu der genannten Kupplung (6) bildet.

6. Vorrichtung nach einem beliebigen der vorstehenden Patentansprüche, **dadurch gekennzeichnet, dass** die genannten elastischen Mittel (8) aus einer Schraubenfeder (21) gebildet sind.

## Revendications

1. Un dispositif pour raccorder de façon amovible une conduite d'alimentation de carburant avec un élément de distribution, comprenant :
un premier raccord de conduite (2) essentiellement tubulaire, pouvant être raccordé à l'élément de distribution ;
un second raccord de conduite (3) essentiellement tubulaire, pouvant être raccordé à une extrémité de la conduite ;
des moyens de raccordement (4) pour faire passer lesdits raccords de conduite (2, 3) d'une position de raccordement réciproque à une position de détachement réciproque ;
des moyens (5) d'ouverture du passage du carburant quand ledit premier raccord de conduite (2) et ledit second raccord de conduite (3) sont raccordés et des moyens (5') de fermeture du passage du carburant quand lesdits raccords de conduite (2, 3) sont détachés, lesdits moyens d'ouverture (5) et moyens de fermeture (5') étant situés à l'intérieur dudit premier raccord de conduite (2) et dudit second raccord de conduite (3), lesdits moyens de raccordement (4) comprenant :
un manchon (6) à l'intérieur duquel le second raccord de conduite (3) est mobile ;
une pluralité de billes (10) logées dans des logements (11) correspondants disposés de façon annulaire sur le second raccord de conduite (3), lesdites billes (10) pouvant s'engager radialement dans une première gorge annulaire (12) réalisée sur ledit premier raccord de conduite (2) afin d'obtenir une position de blocage du premier raccord de conduite (2) à l'intérieur du second raccord de conduite (3), lesdites billes (10) pouvant s'engager dans une seconde gorge annulaire (13) réalisée sur le manchon (6) afin de définir une position de déblocage du premier raccord de conduite (2) par rapport au second raccord de conduite (3) ;
des moyens élastiques (8) interposés entre ledit manchon (6) et ledit second raccord de conduite (3) pour maintenir ledit second raccord de conduite (3) dans la position de blocage avec ledit premier raccord de conduite (2) ; et
un élément à bague (14) monté sur ledit second raccord de conduite (3) et ayant une première portion annulaire (14a) entièrement taraudée, associée à un segment fileté (3c) correspondant dudit second raccord de conduite (3) ; ledit dispositif étant **caractérisé en ce que**, par vissage de l'élément à bague (14) sur le segment fileté (3c), ledit élément à bague (14) déplace le second raccord de conduite (3) à l'intérieur du manchon (6) et comprime les moyens élastiques (8) jusqu'à ce que les billes (10) soient au niveau de la seconde gorge annulaire (13) du manchon (6) afin de faire passer ledit second raccord de conduite (3) dans ladite position de déblocage pour obtenir ledit raccordement du premier raccord de conduite (2) avec le second raccord de conduite (3).

2. Le dispositif selon la revendication 1, **caractérisé en ce que** ledit élément à bague (14) présente une seconde portion annulaire (14b) dont une extrémité est en contact avec ledit manchon (6) dans ladite position de blocage.

3. Le dispositif selon la revendication 1, **caractérisé en ce que** le segment fileté (3c) s'étend sur le second raccord de conduite (3) sur une longueur supérieure à celle de la première portion taraudée (14a) de la bague (14) nécessaire pour faire passer ledit second raccord de conduite (3) dans ladite position de déblocage afin d'obtenir ledit raccordement du premier raccord de conduite (2) avec le second raccord de conduite (3).

4. Le dispositif selon l'une quelconque des revendications précédentes, **caractérisé en ce que** lesdits moyens de raccordement (4) comprennent en outre des moyens (45) de retenue dudit second raccord de conduite (3) sur ledit manchon (6) afin de définir ladite position de blocage dudit second raccord de conduite (3) avec ledit premier raccord de conduite (2).

5. Le dispositif selon la revendication 4, **caractérisé en ce que** lesdits moyens de retenue (45) consistent en une bague (50) présentant une portion saillant d'une rainure (40) réalisée sur ledit second raccord de conduite (3) et définissant une butée de fin de course dudit second raccord de conduite (3) par rapport audit manchon (6).

6. Le dispositif selon l'une quelconque des revendications précédentes, **caractérisé en ce que** lesdits moyens élastiques (8) consistent en un ressort hélicoïdal (21).
